# EUROPEAN PATENT APPLICATION

(11) **EP 2 332 885 A1**
(43) Date of publication of application: **15.06.2011**
(21) Application number: 09817322.2
(22) Date of filing: 01.10.2009
(51) Int. Cl.: C01B 33/44, C08K 7/26, C08K 9/04

(54) **NANOCOMPOSITE MATERIALS HAVING ELECTROMAGNETIC-RADIATION BARRIER PROPERTIES AND PROCESS FOR OBTAINMENT THEREOF**

(30) Priority: 01.10.2008 ES 200802789
(71) Applicant: Nanobiomatters, S.L., 46980 Paterna (Valencia) (ES)
(72) Inventor: LAGARON CABELLO, José María, E-46980 Paterna (Valencia) (ES); NUÑEZ CLAZADO, María Eugenia, E-46980 Paterna (Valencia) (ES)
(74) Representative: Pons Ariño, Angel
(86) International application number: PCT/ES2009/070411
(87) International publication number: WO 2010/037890

(57) **Abstract**

Nanocomposite materials having electromagnetic-radiation barrier properties comprising laminar nanoadditives with or without organic and/or inorganic surface modification; and a polymeric matrix, process for obtainment thereof and use of said nanocomposite materials in applications of packaging, greenhouse films, coatings, etc.

## Description

### TECHNICAL FIELD OF THE INVENTION

The present invention relates to nanocomposite materials having electromagnetic-radiation barrier properties and to the development thereof to give them the advantageous capacity of blocking or filtering radiation, especially infrared and UV-VIS. The blocking is obtained through the incorporation of a specific type of nanolayers of natural and/or synthetic clays and which may or may not be intercalated with materials of organic type or with organic/inorganic hybrids, which are incorporated in plastic matrixes by in situ polymerization methods. In addition, these nanocomposite materials have unique properties in that they additionally lead to an improvement in other physical properties of the matrix as barrier to gases and vapours, improvement in thermal and mechanical properties, fire resistance and active and bioactive properties with a minimum impact on transparency and toughness. The present invention also relates to the process to prepare said materials.

Furthermore, the present invention relates to the use of the novel materials for multi-sector applications.

### BACKGROUND OF THE INVENTION

In the field of polymers, one of the areas generating greatest interest is the development of composite materials and more specifically nanocomposites. There are different preparation techniques of these nanocomposites by the in situ polymerization method *(*Messersmith PB, Giannelis EP. Chem Mater 1993; 5:1064-6*,* Knani D, Gutman AL, Kohn DH. J Polym Sci Part A: Polym Chem 1993; 31:1221-32*,* Tong Z, Deng Y. Polymer 2007; 48:4337-43*,* Paul M-A, Alexandre M. Macromol Rapid Commun 2003; 24:561-6*,* Tarkin-Tas E, Goswami SK. J App Pol Sci 2008; 107:976-84*,* Zhang X, Simon LC. Macromol Mater Eng 2005; 290:573-83*).* Furthermore, these novel nanocomposites and their processing techniques are disclosed in patents WO/2001/012678, WO/2006/055301, US 7129287 B1, US 2005/0137288, US 7026365 B2 and EP 1 321 489 A1. These documents show some examples of patents in the literature of polymer-clay nanocomposites prepared from clays modified and incorporated in the polymeric matrices via in situ polymerization methods. These documents disclose a nanocomposite material such as an exfoliated or intercalated plate, with a tactoid structure of nanometric dimensions, comprising intercalated or exfoliated clay dispersed in a polymeric matrix, such as an oligomer, a polymer, or a mixture thereof.

For example, patent WO/2001/012678 discloses the method to obtain nanocomposites based on homopolymers and copolymers of polyamide and silicates. The physical properties of the prepared nanocomposites exceed the uncharged polymers.

Nevertheless, even with the various preparation methods of nanocomposites due to in situ polymerization described, and with different types of modified clays, the manufacturing of nanocomposite materials is not described with improved physical, mechanical and thermal properties with respect to the pure polymer and further with the capacity of blocking electromagnetic radiation and with the additional capacity to allow the fixation and/or controlled release of active substances (such as antimicrobial, antioxidant, oxygen sequestrators) and bioactive substances.

Protection against electromagnetic radiation is a basic requirement for many applications of plastics such as preserving the quality of packaged food or in greenhouse plastics. In this last case, metal and paper containers, which are opaque have that function, nevertheless, the most widely used plastic containers are transparent in general to a large part of the electromagnetic radiation in the infrared (IR), ultraviolet (UV) and visible (VIS) zones. Therefore, protection against UV-VIS light is being investigated of polymeric containers of sensitive food such as fruit, vegetables, juices, vitamin and sports drinks *(*M. van Aardt, S. E. Duncan, J. E. Marcy, T. E. Long , and C. R. Hackney. J DAIRY SCI 84: 1341-1347 JUN 2001*,* Conrad, KR, Davidson, VJ, Mulholland, DL, Britt, I.J, Yada, S. J FOOD SCI 70 (1): E19-E25 JAN-FEB 2005*,* Goldhan G, Rieblinger K. European Food & Drink Review: No. 3, Autumn, 69, 71-72, 2002*).* There are studies that show the transmission spectrums of UV-VIS light of polymeric nanocomposites of some plastic materials *(*T.D. Fornes, P.J. Yoon, D.R. Polymer 44 (2003) 7545-755*),* polyamide *(*Yeh, J.M., Chen, C.L., Kuo, T.H., Su, W.F.H., Huang, S. Y., Liaw, D.J., Lu, H. Y.,Liu, C.F., Yu, Y.H. Journal of Applied Polymer Science, Vol. 92, 1072-1079 (2004*)),* PVC *(*Chaoying Wan, Yong Zhang, Yinxi Zhang. Polymer Testing 23 (2004) 299-306*),* Polyvinyl alcohol (A. H. Bhat, A. K. Banthia. Journal of Applied Polymer Science, Vol. 103, 238-243 (2007*))* and other conventional ones *(*Guo-An Wang, Cheng-Chien Wang, Chuh-Yung Chen. Polymer Degradation and Stability 91 (2006) 2443-2450*).* Nevertheless, no specific design has been published describing the manufacturing process of nanocomposites for electromagnetic-radiation protection applications.

The wavelengths of greatest interest in electromagnetic-radiation barrier applications are mainly between 200 nm and 1 mm. This section of the electromagnetic spectrum can be divided into 3 zones: the Ultraviolet zone (UV) between (100-400), the visible zone (400-700 nm) and the near infrared zone (700-2,200 nm). Other zones of the electromagnetic spectrum of interest in applications are microwaves and radio waves, i.e. from 1 mm to 10 km wavelength. Ultraviolet radiation is only 3% of the total of the radiation that the earth receives, but this radiation is the cause of chemical reactions, degradation of polymers and even bleaching. For this reason, blocking of ultraviolet radiation is an important parameter for plastics in multi-sector applications such as food containers, greenhouse films, coatings in general applications, including military and civil applications, products in spray, creams and paints and other applications with interest in protection against the penetration of electromagnetic radiation.

### DESCRIPTION OF THE INVENTION

The present invention discloses nanocomposites that have electromagnetic-radiation barrier properties either overall or selectively, due to the chemical composition thereof, their surface modification and the good dispersion of the clay nanolayers in the plastic matrix that lead to an absorption, refraction or diffraction of the radiation that passes through the composite material. Due to this reduced charge size, nanometric in thickness, and its high ratio of appearance and chemical functionality, its application is advantageous as it additionally leads to synergies in other properties such as improved gas and vapour barrier properties, thermal or mechanical, and permit the possibility of the incorporation of active substances (such as antimicrobial, antioxidants) and bioactive substances and allow the fixation or the controlled release thereof. The incorporation and dispersion of these nanometric charges in the polymeric matrix is achieved by in situ polymerization methods. The nanoadditives are dispersed in a liquid monomer or in a mixture or several monomers of a solution or dispersion thereof and then the polymerization starts, giving rise to the nanocomposite, for its advantageous application both in the packaging of products of interest for food and for applications in other sectors.

Therefore, a first essential aspect of the present invention relates to nanocomposite materials comprising at least:
- Layered nanoadditives (clay nanolayers) with or without organic and/or inorganic surface modification.
- A polymeric matrix, without being limiting in nature, of the thermoplastic, elastomeric, thermostable type or of polymers derived from biomass and/or biodegradable.

In this sense, the nanoadditives of laminar type are mainly based on layered phyllosilicates and/or double layer hydroxides and/or mixtures of these with one another or with other phyllosilicates, and in all cases with or without organic or inorganic surface modification. These three minerals have in themselves unique properties in acting as an electromagnetic-radiation barrier due to their composition and natural colouring and their functionalization potential with absorbent and/or blocker products of this radiation.

The layered nanoadditives will be in a proportion between 0.01 and 98% by weight within the polymeric matrix, preferably between 1% and 50%.

The layered phyllosilicates are selected without limitation from the group formed by montmorillonite, kaolinites, gibbsite, dickite, nacrite, sepiolite, bentonites, smectite, hectorite, sepiolite, saponite, halloysite, vermiculites, mica, preferably they will be based on materials of vermiculite, mica and kaolinite type. The best known double layer hydroxides such as hydrotalcites or LDH are synthetic or natural materials with layered structured which also perform blocking functions. These double hydroxides have positive charges on the surface of the layered structure and anions exchangeable between the layers to neutralize the charge. In all cases, the layered materials may or may not be intercalated with materials of organic and/or inorganic type.

A preferred embodiment of the present invention relates to the nanocomposite materials as described above, comprising layered nanoadditives with surface modification, said modification being the addition of an initiator of a polymerization reaction. The surface modification when applicable makes it possible to introduce in the layered nanoadditive an initiator of the polymerization reaction, selected from the group formed by free radicals, cationic compounds, anionic compounds, coordination compounds and/or organometallic compounds and further compatibilizing with the components of the mixture wherein the polymerization reaction takes place. As a consequence, a better exfoliation of the clay is obtained in the polymeric matrix and it thus permits achieving a good morphology to improve the electromagnetic radiation barrier and blocking properties. The surface modification may also increase the blocking capacity of electromagnetic radiation of the nanoadditives.

The plastic matrices are selected without limitation from the group formed by thermoplastics, thermostable materials and elastomers such as polyolefins, polyesters, polyamides, polyimides, polyketones, polyisocyanates, polysulfones, styrenic plastics, phenol resins, amide resins, ureic resins, melamine resins, polyester resins, epoxy resins, polycarbonates, polyvinyl pyrrolidones, epoxy resins, polyacrylates, rubbers and gums, polyurethanes, silicones, aramides, polybutadiene, polyisoprenes, polyacrylonitriles, PVDF, PVA, PVOH, EVOH, PVC, PVDC or derivatives of biomass and biodegradable materials such as proteins, polysaccharides, lipids and biopolyesters or mixtures of all of these and they may contain all type of additives typically added to plastics to improve their manufacturing and/or processing or their properties.

The polymeric matrix will be in a proportion between 2 and 99.99% by weight over the total of the composite material, preferably from 50% to 99.99%.

According to a preferred embodiment, the matrices of plastic type contain other substances that act as a barrier to electromagnetic radiation to reinforce the effect, substances to give fire resistance and/or active or bioactive substances may be added, selected from the group formed by antimicrobial organic and inorganic metal salts (preferably of silver, copper, nickel or cobalt), low molecular weight substances that have active or bioactive substances selected from ethanol, or ethylene, or of the essential oil type (preferably thymol, carvacrol, linalool and mixtures), or antimicrobial peptides of reduced size (preferably bacteriocins) natural or obtained by genetic modification (preferably nisins, enterocins, lacticins and lysozyme), or natural or synthetic antioxidants (preferably polyphenols, preferably flavonoids, rosemary extract or of other plants and vitamins, preferably ascorbic acid or vitamin C), or drugs (antibiotics, anticancer drugs, etc..), or enzymes or compounds of bioavailable calcium, or prebiotics (undigestible fibre), or organic and inorganic metal salts (preferably of silver, copper, nickel or cobalt).

These materials will be in any case essentially characterized in that they have the introduction in the plastic matrices of layered type charges with sizes in the range of nanometres in the thickness that will be nanoparticulated in the thickness during in situ polymerization processes. These materials have better barrier, fire resistance, thermal and mechanical properties with respect to the pure material, and make it possible to increase the electromagnetic-radiation barrier, in addition to allowing the controlled release of substances with antimicrobial, antioxidant or bioactive properties.

A second essential aspect of the present invention relates to a process for obtainment of said materials.

The incorporation of the nanoadditives to form the nanocomposites takes place through an in situ polymerization type process and consists of intercalating the initiator system necessary for the polymerization reaction in the interlayer region of the clay particles, preparing a mixture of the clays intercalated with the initiator system with the monomers and starting the polymerization reaction. As the polymer chains grow, the clay layers will separate until dispersing them.

The nanocomposites obtained may also be used as concentrates or masterbatch and be transformed with all type of techniques used for the processing of polymers to give them the suitable form for their final use.

Therefore, the present invention discloses a process for manufacturing the nanocomposite materials described in the present invention, comprising the steps of:
- Decrease in the layered particle size due to mechanical action.
- Wet or dry classification of the particles obtained in the previous stage.
- Elimination of the organic matter, crystalline oxides and hard particles not subject to modification until the obtainment of enriched layered structures.
- Pre-treatment of the layered structures by means of precursors and/or modifiers and/or active and bioactive substances.
- Introduction of a polymerization initiator or catalyst or mixture thereof.
- Mixing of monomers and clays and potentially with other systems of radiation barrier, of fire resistance and/or active and/or bioactive.
- Initiation of an in situ polymerization reaction to obtain a concentrate of the additive.
- Optional incorporation of the concentrate in the same or in another plastic matrix by any plastic processing method with the possibility of incorporating in this step other radiation barrier and/or active and bioactive substances that reinforce the effect.

The steps to perform are described in greater detail below:
**1)** Decrease in layered particle size by means of mechanical action, for example, and without being limiting in nature, by means of grinding technologies. This decrease is carried out to obtain a particle size under 30 microns in D90.
**2)** Classification in vibrating screen, centrifuge, filter press or any other type of dry or wet filtration system until a range comprised between 0.1 and 100 microns, preferably a decrease is achieved of the particle size under 25 microns and more preferably under 3 microns in D90 (no more than 10% of the material is above that value).
**3)** Elimination of the organic matter by, and without being limiting in nature, decanting techniques, collection of supernatant or by chemical reaction with oxidizing substances such as peroxides.
**4)** Elimination of the crystalline oxides and hard particles not subject to modification either by means of centrifugation and/or gravimentric processes in solution or by turbo-dryers, preferably by a centrifugation process either by wet or dry centrifugation or of an atomization process with controlled depression or by means of any other industrial drying process including lyophilisation.
**5)** Obtainment of fine layers either in liquid suspension or by means of later drying by the methods described in the previous step in powder. These systems both in liquid suspension and in powder are considered as the starting product of the present invention.
**6)** Pre-treatment of the layered structures in one or several steps, by means of the use of precursors of expander types as shown in Table 1.

| **MODIFIER** | **d_{MODIFIER} (nm)** | **MODIFIER** | **d_{MODIFIER} (nm)** |
|---|---|---|---|
| *Unmodified kaolinite* | 0.72 | *Unmodified montmorillonite* | 0.98 |
| *Dimethyl sulfoxide (DMSO)* | 1.11 | *Ethylene polyoxide* | 1.12 |
| *Silver nitrate* | *0.74* | *Silver nitrate* | *0.99* |
| *Silver acetate* | *0.74* | *Silver acetate* | *0.99* |
| *Nickel chloride* | *0.75* | *Nickel chloride* | *0.99* |
| *Cobalt chloride* | *0.76* | *Cobalt chloride* | *0.99* |
| *Copper nitrate* | *0.76* | *Copper nitrate* | *1.00* |
| *N-methyl formamide (NMF)* | 1.02 | *Cellulose acetobutyrate* | 1.13 |
| *Hydrated hydrazine* | 1.03 | *Calcium butyrate* | 0.92 |
| *Water* | 0.78 | *Sucrose Acetoisobutyrate* | 1.08 |
| *Alcohols* | 1.10 | *Manganese butyrate* | 0.95 |
| *Anhydrous hydrazine* | 0.96 | *Carboxymethyl starch* | >3 |
| *Acetamide* | 1.09 | *Starch* | 1.21 |
| *DMSO+Methanol(MeOH)* | 1.12 | *Hydroxyethyl starch* | 1.15 |
| *Hexanoic acid* | 1.23 | *Hydroxypropyl starch* | 1.14 |
| *Acrylamides* | 1.44 | *Adonitol* | 1.04 |
| *Glucose* | 1.25 | *Sorbitol* | 1.19 |
| *Archylamide* | 1.14 | *Dibenzylidene sorbitol* | 1.16 |
| *Salicylic acid* | 1.07 | *Ethylene glycol* | 0.95 |
| *Manganese acetate* | 1.41 | *Polypropylene glycol* | 1.01 |
| *Caprolactam* | 1.18 | *Propylene glycol* | 1.01 |
| *Vinyl acetate* | 1.21 | *Glycolic acid* | 1.06 |
| *Potassium acetate* | 1.39 | *Triethylene glycol* | 1.08 |
| *Tannic acid* | 1.09 | *Tetraethylene glycol* | 1.06 |
| *Maleic acid* | 1.20 | *Glycerol* | 1.02 |
| *Maleic anhydride* | 1.20 | *1,2-Propaneodiol* | 1.09 |
| *Lactic acid* | 1.08 | *1,3-Propaneodiol* | 0.98 |
| *Adipic acid* | 1.03 | *Polyethylene glycol M_{w}=1000* | 1.11 |
| *Acetic acid* | 1.10 | *Polyethylene glycol M_{w}=3400* | 1.12 |
| *Acetaldehyde* | 0.91 | *Sorbitan* | 1.09 |
| *Butyric acid* | 1.01 | *Dipropylene glycol* | 1.03 |
| *Tetrafluoroethylene* | 0.98 | *Diethylene glycol* | 1.04 |
| *Chlorotrifluoroethylene* | 1.05 | *Vinyl pyrrolidone* | 1.23 |
| *Hexamethylene* | 1.02 | *Vinyl versatate* | 1.11 |

Preferably, the expanders are selected from the group formed by DMSO, alcohols, acetates, or water and a mixture thereof, which activate the fines by an initial increase in the basal spacing of the layers and modify the surface characteristics of the clay. The penetration of the precursors will be accelerated by the use of temperature, a turbulent regime homogenizer, ultrasounds, pressure or mixture of the above. Their drying can be performed by evaporation in oven, lyophilisation, centrifugation and/or gravimentric processes in solution or turbo-dryers or by atomization. According to another preferred embodiment of the present invention, the dissolution of the intercalation precursor can be used, without a prior washing and/or drying process, as starting means for the following step of incorporating the modifier. These precursors are added in a quantity from 0.01 to 98%, preferably from 1 to 60%.
**7)** Optionally, intercalating in aqueous base or with polar solvents, inorganic, organic or hybrid substances in the layered structure. In this same sense, the compounds to be intercalated are selected, and without being limiting in nature, from the group formed by PVOH, EVOH and derivatives of the same family, and/or biopolymers such as natural or synthetic peptides and proteins obtained chemically or by genetic modification of microorganisms or plants and natural or synthetic polysaccharides obtained chemically or by genetic modification of microorganisms or plants and natural or synthetic polysaccharides obtained chemically or by genetic modification of plants and polypeptides, lipids and waxes, nucleic acids and polymers of synthetic nucleic acids obtained chemically or by genetic modification of microorganisms or plants, and biodegradable polyesters such as polyacetic acid, polylactic-glycolic, polycaprolactone, adipic acid and derivatives and polyhydroxyalkanoates, preferably polyhydroxybutyrate and its copolymers with valerates. It is also possible to include biomedical materials such as hydroxyapatites and organic salt phosphates, phosphononium salts and quaternary ammonium salts permitted for food contact by the legislation - preferably hexadecyltrimethylammonium bromide, ammonium pentadecafluorooctanoate, bis(2-hydroxyethyl)-2-hydroxypropyl-3-(dodecyloxy) methylammonium chloride and polyethylene glycol esters with monocarboxylic aliphatic acids (C6-C22) and their ammonium and sodium sulfates- and silanes - preferably 3-aminopropyltrimethoxysilane, 3-aminopropyltriethoxysilane, 3-glycidoxypropyltrimethoxysilane, (Gamma)-methacryloxypropyl-trimethoxysilane and tetramethylorthosilicate and other particles or nanoparticles with electromagnetic radiation blocking capacity such as titanium dioxide and others typically used for this function. They are intercalated in a quantity from 0.01 to 98%, preferably from 1 to 60%.
When the organic matter intercalated is EVOH or any material of the family thereof with molar ethylene content preferably less than 48%, and more preferably less than 29%, they are taken to saturation in aqueous medium or in specific solvents of alcoholic type and mixtures of alcohols and water, more preferably of water and isopropanol in proportions by volume of water greater than 50%.
On the other hand, the biopolymers with or without plasticisers, with or without crosslinkers and with or without emulsifiers or surfactants or another type of nanoadditives, are of the group formed by synthetic and natural polysaccharides (plant or animal), such as cellulose and derivatives, carrageenans and derivatives, alginates, dextran, gum arabic and preferably chitosan or any of its derivatives both natural and synthetic, more preferably chitosan salts and even more preferably chitosan acetate, and proteins both derived from plants and animals, such as corn proteins (zein), gluten derivatives, such as gluten or its gliadin and glutenine fractions and more preferably gelatine, casein and soy proteins and derivatives thereof, as well as natural or synthetic polypeptides of the elastin type obtained chemically or by genetic modification of microorganisms or plants, lipids such as beeswax, carnauba wax, candelilla wax, *shellac* and fatty acids and monoglycerides and/or mixtures of all the above.
In the case of chitosan, the degree of deacetylation will preferably be greater than 80% and more preferably greater than 87%. The penetration of the precursors will be accelerated by the use of temperature, a turbulent regime homogenizer, ultrasound, pressure or a mixture thereof.
In a later step, or alternative to the modification of the fines pre-treated with the previously proposed precursors and modifiers, low molecular weight substances will optionally be added which act as barrier to the penetration of electromagnetic radiation considered, fire resistance and/or active or bioactive in order that they are either intercalated and/or released in controlled form giving rise to compounds with active or bioactive capacity. The active substances shall be ethanol, or ethylene, or the essential oil type, preferably thymol, carvacrol, linalool and mixtures, or antimicrobial peptides of reduced size (bacteriocins) natural or obtained by genetic modification, preferably nisins, enterocins, lacticins and lysozyme, or metal nanoparticles with natural or synthetic antimicrobial or antioxidant properties, preferably polyphenols, and more preferably flavonoids, rosemary extract and vitamins, preferably ascorbic acid or vitamin C), or drugs (antibiotics, anticancer drugs, etc..), or enzymes or compounds of bioavailable calcium. It is expected that these elements can remain fixed and/or released from the nanocomposite towards the product in controlled form (control of the matrix) and exercise their active or bioactive role they can be released from the matrix and that the nanoclays control the kinetics (control of the nanoadditive) or from both. The contents to be added are, in general, less than 80% by volume of the solution, preferably less than 12% and more preferably less than 8%. The penetration of these precursors will be accelerated by the use of temperature, a turbulent regime homogenizer, ultrasound, pressure or a mixture of the above.
8) Introducing in that resulting from the previous steps in solid or liquid state a polymerization initiator or catalyst or a mixture of several so that the initiator molecules are absorbed on the surface of the clay layers and/or intercalated between them. It is preferable that the molecules or functional groups in the molecules introduced belong to the group of polymerization initiators by opening of a ring for polymerization of monomers of lactone, ethylene oxide or cyclic siloxane. These initiators may contain functional groups of primary alcohols that may be converted in a radical alcoxide, by reaction with AIEt₃, which starts the polymerization by ring opening. The molecules or functional groups of the molecules introduced may also belong to the group of polymerization initiators by free radical of unsaturated ethylene monomers, such as, for example, secondary benzyl groups bonded to a nitroxide. Said molecules may contain an anionic or cationic functional group that allows the adherence thereof to the clay layers by ion exchange with anions or cations previously present in the interlayer space. The initiators or catalysts of the polymerization reaction or mixture thereof are selected from the group formed by unsaturated monomers (containing at least one double bond), or of the group of monomers carrying two or more functional groups; and are added in a quantity from 0.01 to 99.99%.
**9)** Preparing a mixture with at least one type of monomer (molecule with small molecular mass which, bound to other monomers, of its same type or another, by chemical bonds, generally covalent, form macromolecules called polymers) and at least one type of clay optionally modified according to the aforementioned steps. The mixture of monomers may or may not be dissolved or dispersed (in emulsion) in one or several solvents or dispersion media. The monomers used may be of unsaturated type (containing at least one double bond), or of the type carrying two or more functional groups. It is preferable, but not limiting in nature, that at least one of the monomers is selected within the group formed by ethylene, propylene, styrene, methylmethacrylate, vinyl, lactones or vinylene monomer. The mixture may contain all type of additives typically added to plastics to improve their processing or their properties. Other products may also additionally be added in all the possible compositions with intrinsic electromagnetic-radiation barrier properties such as titanium dioxide or others to reinforce the protection, substances to give fire resistance and/or active and/or bioactive substances, complementary or reinforcing.
10) Starting an in situ polymerization reaction in the mixture, so that it causes that at least one type of monomer polymerizes and forms, as a consequence thereof, the nanocomposite with the nanoadditive dispersed in the polymeric matrix. The initiation of the polymerization reaction may make use of the use of heat, stirring, radiation, pressure, oxidant agents or combined use thereof.
11) Optionally, the additive concentrate can be subjected to chemical modification to transform the matrix, for example by means of a hydrolysis process or another typically applied to polymers derived from chemical modification of other polymers that act as precursors including reactive extrusion.
12) Processing (followed by, for example, pelletizing and moulding to obtain a final part) by means of any plastic processing technique. During the processing it is possible to add the nanoadditive concentrate with substances typically used in the processing of plastics to improve the processing and/or the properties thereof. Also and optionally, it is possible to incorporate in this stage during the processing other additives reinforcing the electromagnetic-radiation barrier properties, of fire resistance and/or active and/or bioactive.
**13)** Optionally, addition of the concentrate of the nanoadditive obtained in the previous stage with the same or with another polymer by any plastic processing technique followed by, for example, pelletizing and moulding to obtain a final part. It is also possible to add during the processing in this stage with other additives reinforcing the electromagnetic-radiation barrier properties, of fire resistance and/or active and/or bioactive.

According to another fundamental aspect of the present invention, the nanocomposite materials obtained by means of the process described in the present invention are used to reinforce electromagnetic-radiation barrier of plastics in applications of packaging in general and of food and food components in particular, for greenhouse films, coatings in general applications including military and civil applications, products in spray, creams and paints, for biomedical applications as nanobiocomposites and in drugs to optionally release active and/or bioactive principles, as barrier to gases, vapours, solvents and organic products, such as aromas and components of aromas, oils, greases and hydrocarbons, and to mixed products of organic and inorganic character, for applications that require biodegradable or compostable character, for active containers that require antimicrobial or antioxidant character or of any other type that requires the controlled release of low molecular weight substances, preferably volatile, for applications that require antimicrobial capacity, for the use of biopolymers either without the need for use of plasticizing agents or requiring lower quantities of these and for materials with better thermal and mechanical properties and with minimal impact on transparency and toughness. The nanoadditive concentrate (nanocomposite materials) obtained is used as masterbatch in any plastic processing process. It can also act as materials with fire resistance.

All characteristics and advantages stated, as well as others of the invention, may be better understood with the following example. On the other hand, the example does not have a limiting but rather an illustrative character so that the invention can be better understood.

### BRIEF DESCRIPTION OF THE FIGURES

The invention is described below with reference to the attached figures, wherein:

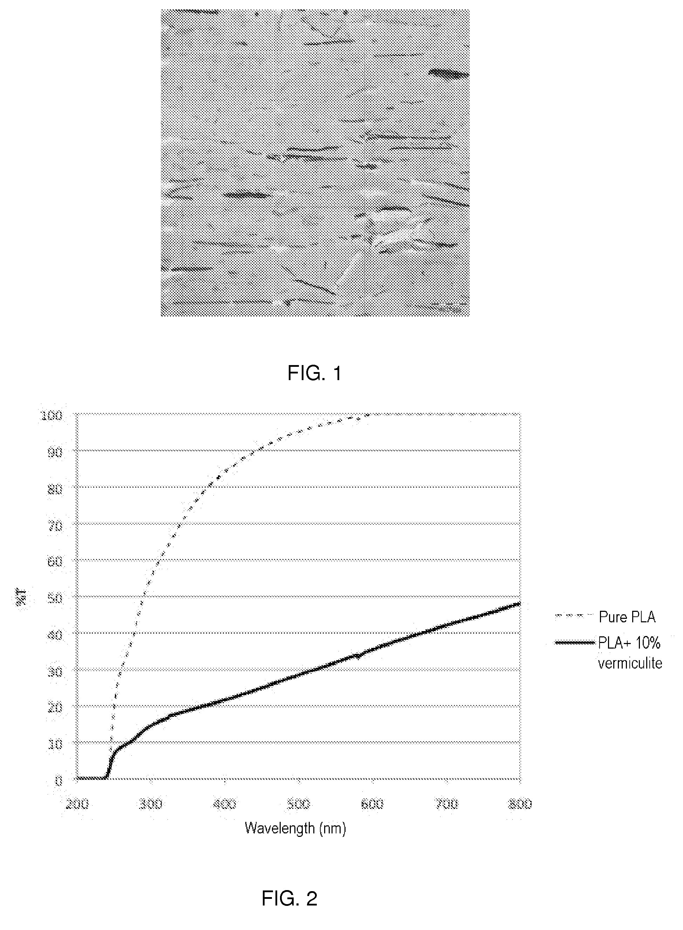

Figure 1 is an image obtained by scanning transmission electron microscopy (TEM) showing the main morphologies that can be observed in the nanocomposites obtained in accordance with the present invention. The image shows us that the clay layers are exfoliated in the polymeric matrix and that they have nanometric sizes in thickness. Observe the great ratio of appearance (ratio between length and thickness) the dispersed layers have that guarantee the great protection against the passage of electromagnetic radiation and against gases and vapours.
Figure 2 shows the UV-VIS spectrums obtained with a UV-VIS spectrophotometer. This graphic shows the spectrums of films of 30 microns of the highly transparent polymer polylactic acid and of its nanocomposite with 10% content in clay based on vermiculite and prepared according to Example 1 by in situ polymerization of the lactic acid in the presence of the nanoadditive. It is observed how on introducing the nanoadditive a more intense blocking occurs of the UV-Vis radiation. The y-axis measures the wavelength (nm) against % of transmission of the x-axis.

### EXAMPLES

Example 1: Polylactic acid films (PLA) with different contents (1%, 5%, 10% and 20%) of clays of the vermiculite type modified with 40% by mass of hexadecyltrimethylammonium bromide and triethylaluminium (AIEt₃) as polymerization initiator in 1:1 ratio and of a clay (5%) of montmorillonite type modified with 40% by mass of hexadecyltrimethylammonium bromide and triethylaluminium (AIEt₃) in 1:1 ratio. Initially, the modified clay was dispersed in a 0.025 molar solution of lactic acid in tetrahydrofurane (THF) at 70ºC in inert atmosphere. The solvent was eliminated in reduced pressure conditions. The in situ polymerization of the lactic acid was carried out at 120ºC during 48h after swelling of the clay during 1 h. A film with a 30 micron thickness was formed by melt compression of the resulting nanocomposite. These nanocomposites were characterized studying their morphology by TEM.

Example 2: Another study demonstrated the dispersion capacity of the UV-Vis light. To do this, in the films of around 30 microns, the absorption capacity of UV-Vis radiation was evaluated by means of a UV-Visible spectrophotometer. Whilst the pure polymer has a transmittance of around 100%, the films of PLA + 10% clay make it possible to reduce the transmission of UV light between 83-90% thus managing to effectively block the passage of UV radiation and also a large part of visible radiation. In the visible area, it manages to block the radiation up to 65% with an addition of a 10% clay content (see Figure 2). This type of clays of vermiculite type, suitably modified, produce a strong blocking of the light in both the UV and visible region, due to the great nanometric dispersion reached in the matrix. The application of these biodegradable nanocomposites of polylactic acid give rise to the formation of a packaging material that is very interesting for its use, for example, in the storage of food sensitive to UV-Vis radiation and low molecular weight gases such as oxygen, water vapour and limonene.

## Claims

1. Nanocomposite materials having electromagnetic-radiation barrier properties, **characterized in that** they comprise the following elements:
a. layered nanoadditives with or without organic and/or inorganic surface modification; and
b. polymeric matrix.

2. Nanocomposite materials according to claim 1, **characterized in that** the nanoadditives are phyllosilicates, double layer hydroxides or mixtures thereof with one another or with other phyllosilicates with or without organic or inorganic surface modification.

3. Nanocomposite materials according to claim 2, **characterized in that** the nanoadditives are phyllosilicates selected from those of kaolinite or vermiculite type.

4. Nanocomposite materials according to any of claims 1 to 3, **characterized in that** the nanoadditives are in a proportion from 0.01 to 98% by weight with respect to the matrix.

5. Nanocomposite materials according to claim 4, **characterized in that** the nanoadditives are in a proportion from 1 to 50% by weight with respect to the matrix.

6. Nanocomposite materials according to any of claims 1 to 5, **characterized in that** the polymers that form the matrix are selected from the group comprising thermoplastics, elastomers, thermostable materials or combinations thereof.

7. Nanocomposite materials according to any of claims 1 to 6, **characterized in that** the polymers that form the matrix are biopolymers derived from biomass and/or biodegradable.

8. Nanocomposite materials according to any of claims 1 to 7, **characterized in that** the matrix is in a proportion from 2 to 99.99% by weight with respect to the total of the material.

9. Nanocomposite materials according to claim 8, **characterized in that** the matrix is in a proportion from 50 to 99.99% by weight with respect to the total of the material.

10. Nanocomposite materials according to any of claims 1 to 9, **characterized in that** the polymeric matrix further contains other substances selected from substances that act as a barrier to electromagnetic radiation, substances to give fire resistance, active or bioactive substances or combinations thereof.

11. Nanocomposite materials according to any of claims 1 to 10, **characterized in that** in the layered nanoadditives with or without organic modification is incorporated an initiator of a polymerization reaction selected from the group formed by free radicals, cationic compounds, anionic compounds, coordination compounds and/or organometallic compounds.

12. Process to obtain the nanocomposite materials according to claims 1 to 11, comprising the following steps:
a. decrease in laminar particle size by mechanical action;
b. wet or dry classification of the particles obtained in the previous stage;
c. elimination of the organic matter, crystalline oxides and hard particles not subject to modification until the obtainment of layered nanoadditives;
d. introduction of a polymerization initiator or catalyst or mixture thereof;
e. mixing of at least one type of precursor monomer of the matrix and at least one type of layered nanoadditive obtained in the previous steps.
f. initiation of an in situ polymerization reaction in order to obtain a concentrate of the nanocomposite material; and
g. processing of material obtained in the previous stage.

13. Process according to claim 12, **characterized in that** in stage (a) the size of the laminar particles is reduced to a particle size under 30 microns in D90.

14. Process according to any of claims 12 or 13, **characterized in that** the classification of stage (b) is carried out until a particle size from 0.1 to 100 microns in D90.

15. Process according to claim 14, **characterized in that** the classification of stage (b) is carried out until a particle size from 0.1 to 25 microns in D90.

16. Process according to claim 15, **characterized in that** the classification of stage (b) is carried out until a particle size from 0.1 to 3 microns in D90.

17. Process according to any of claims 12 to 16, **characterized in that** the elimination of the organic matter of stage (c) is performed by means of decanting techniques, collection of supernatant or by chemical reaction with oxidizing substances.

18. Process according to any of claims 12 to 16, **characterized in that** the elimination of crystalline oxides and hard particles of stage (c) is carried out by means of processes of centrifugation, gravimentric in solution and/or by turbo-dryers.

19. Process according to any of claims 12 to 18, which further includes a stage of pre-treatment of the layered nanoadditives obtained in stage (c) by means of precursors, active and bioactive substances or combinations thereof.

20. Process according to claim 19, **characterized in that** the precursors are of expander type, of compatibilizer type, of antimicrobial type or mixtures thereof.

21. Process according to any of claims 19 or 20, **characterized in that** the precursors are added in a quantity from 0.01 to 98% by weight with respect to the layered nanoadditive.

22. Process according to claim 21, **characterized in that** the precursors are added in a quantity from 1 to 60% by weight with respect to the layered nanoadditive.

23. Process according to any of claims 19 to 22, **characterized in that** a drying stage is performed after the stage of pre-treatment of the layered nanoadditives by means of precursors.

24. Process according to any of claims 19 to 23, **characterized in that** after the stage of pre-treatment of the layered nanoadditives by means of precursors, an intercalation stage is carried out with organic or hybrid substances.

25. Process according to claim 24, where the organic or hybrid substances are added in a quantity from 0.01 to 98% by weight with respect to the layered nanoadditive.

26. Process according to claim 25, where the organic or hybrid substances are added in a quantity from 1 to 60% by weight with respect to the layered nanoadditive.

27. Process according to any of claims 24 to 26, **characterized in that** a stage of addition of low molecular weight substances is carried out after the stage of intercalation.

28. Process according to claim 27, where the low molecular weight substances are added in proportions less than 80% by volume with respect to the dispersion of the layered nanoadditives and the monomers.

29. Process according to claim 28, where the low molecular weight substances are added in proportions less than 12% by volume with respect to the dispersion of the layered nanoadditives and the monomers.

30. Process according to claim 29, where the low molecular weight substances are added in proportions less than 8% by volume to the dispersion of the clays and the monomers.

31. Process according to any of claims 12 to 30, **characterized in that** the polymerization initiator or catalyst or mixture thereof introduced in stage (d) are selected from the group formed by unsaturated monomers, or from the group of monomers carrying two or more functional groups.

32. Process according to any of claims 12 to 31, **characterized in that** the polymerization initiator or catalyst or mixture thereof introduced in stage (d) is added in a quantity from 0.01 to 99.99% by volume to the dispersion of solvent, nanoadditives and monomers

33. Process according to any of claims 12 to 32, **characterized in that** the mixture of monomers of stage (e) is or is not dissolved or dispersed in one or several solvents or dispersion media.

34. Process according to any of claims 12 to 33, **characterized in that** the monomers of stage (e) are selected from the group formed by monomers of unsaturated type, or of the type carrying two or more functional groups, it being preferable that at least one of the monomers is selected within the group formed by ethylene, propylene, styrene, methylmethacrylate, vinyl, lactones or vinylene monomer.

35. Process according to any of claims 12 to 34, **characterized in that** the mixture of stage (e) contains additives added to plastics.

36. Process according to any of claims 12 to 35, **characterized in that** products are added with intrinsic electromagnetic-radiation barrier properties such as titanium dioxide or others to reinforce the protection.

37. Process according to any of claims 12 to 36, **characterized in that** in stage (g) of processing reinforcing additives are added of the electromagnetic-radiation barrier properties, of fire resistance and/or active and/or bioactive substances.

38. Process according to any of claims 12 to 37, **characterized in that** an addition stage is carried out after stage (g) of processing.

39. Process according to any of claims 12 to 38, **characterized in that** a stage of chemical modification is carried out after stage (f) of initiation of the polymerization reaction to transform the matrix of the concentrate of nanocomposite material obtained in the previous stage.

40. Use of the nanocomposite materials according to any of claims 1 to 11 as plastics in applications of packaging, greenhouse films, coatings in general applications including military and civil applications, products in spray, creams and paints, for biomedical applications such as nanobiocomposites, in drugs to release active and/or bioactive principles, as barrier to solvents and organic products, for applications that require biodegradable or compostable character, for active containers with antimicrobial character or of another type that require the controlled release of low molecular weight substances, for applications that require antimicrobial capacity, for the use of biopolymers without the need for use of plasticizing agents, as materials with fire resistance and for their use as masterbatch in plastic processing processes.

41. Use of the nanocomposite materials according to any of claims 1 to 11, for the protection of products against electromagnetic radiation.
